# EUROPEAN PATENT SPECIFICATION

(11) **EP 1 027 133 B1**
(45) Date of publication and mention of the grant of the patent: **20.04.2005**
(21) Application number: 98945730.4
(22) Date of filing: 23.09.1998
(51) Int. Cl.: B01D 47/00

(54) **DEVICE FOR COOLING GASES**
VORRICHTUNG ZUR KÜHLUNG VON GASEN
DISPOSITIF DE REFROIDISSEMENT DE GAZ

(30) Priority: 23.09.1997 SE 9703426
(43) Date of publication of application: 16.08.2000
(73) Proprietor: GRANSTRAND, Lennart, S-113 33 Stockholm (SE)
(72) Inventor: GRANSTRAND, Lennart, S-113 33 Stockholm (SE)
(74) Representative: Bergstrand, Mikael Gudmundsson
(86) International application number: PCT/SE1998/001713
(87) International publication number: WO 1999/017862

(56) References cited:
- DE-A1- 3 339 844
- DE-A1- 3 431 835
- DE-A1- 3 441 144
- SE-C2- 500 737

## Description

The invention relates to an apparatus comprising at least one cooling chamber for cooling hot, polluted gases, which can be used in plants for power production from hot gases at combustion of solid, fluid or gaseous fuels in larger as well as smaller incineration plants.

A considerable part of the energy production in the world is obtained by combusting different fuels, for instance fossil fuels and biological fuels. These fuels generate gases, which contain pollutants giving rise to environmental problems.

Besides these environmental problems some compounds give rise to problems during combustion. If water solutions of acidic, aggressive compounds condense in incineration plants the risk of corrosion in heat exchangers etc is considerable. Condensation also often implies aggregation of dust etc, depositing on heat-exchange surfaces etc thereby deteriorating heat transfer. To be able to avoid condensation it is normally necessary to allow a certain loss of energy by letting out gases having unnecessary high temperature.

Thus, from environmental and economical point of view it is desirable that as large as much of the energy content in the fuel is employed, while the emissions are as small as possible without the apparatus for cooling being clogged by pollutants.

There are a number of different ways to achieve increased energy recovery from gases simultaneously as the emissions decrease.

In SE-B-448 258 is disclosed an apparatus for energy recovery from gases at combustion of very humid solid fuels, for instance peat, chip and bark, which comprises a scrubber. Water is injected into the scrubber with the injection direction perpendicular to the flow directions of the gases. The water which is collected in the scrubber is fed to a tank and thereafter further to an ion-exchange device and a heat-exchanger, whereafter the water is pumped back to the scrubber. The apparatus is less suitable for oil because problems then will arise with acid corrosion. The gas temperature after the scrubber is disclosed to be 50 °C.

In SE-B-500 737 is disclosed an apparatus working with stack gas cooling and a cooler, which consists of an inlet for the gas and nozzles for adding cooling water in atomised form, furthermore a cooling chamber in which the inlet channel ends, and if required a container for treating pollutants, furthermore a filter for separation of water contaminants and if required an outlet, provided with a water lock. It is so arranged that a conduit connects the cooling chamber to a heat exchanger. The nozzles for cooling water is directed against the flow direction of the gas. The cooling chamber is conventionally designed as a box, provided with at least one partial intermediate wall, arranged so that the gases are forced to travel a length corresponding at least twice the length of the cooling chamber. Preferably the cooling chamber comprises more than one such intermediate wall so that the gases are fed through a labyrinth path. In this path there is provided a number of nozzles.

In SE-B-405 892 is disclosed an apparatus for stack gas cooling which is described to be suitable for oil powered boilers in houses, commercial houses and boiler centrals, which is intended to increase the efficiency of the boiler and to reduce emissions of sulphur containing material to the atmosphere. The apparatus comprises a conventional system having circulating, heated water and radiators heated by the water, wherein a heat pump is so arranged that the condensor pre-heats the water, which is re-circulated to boiler, while the evaporator cools the stack gases after these having heated the water. The thereby obtained condense water is allowed to flow through a filter and down in the discharge.

DE-A1-3 431 835 discloses a U-shaped cleaner having spray nozzles in the two legs, whereby the cleaner is equipped with a system for cleaning and recirculation of added wash water.

The risk of corrosion damages on incineration plants can be decreased by using acid resistant material in the exposed parts. Known material are glass or plastic and in particular acid resistant steel, which is very expensive. The heat-exchangers in which the gases are cooled into must be cleaned regularly to remove soot, trapped in the condensate.

Furthermore, all known plants have large volume, which often is a considerable problem during installation of the equipment. Prior art technology is also costly, often depending on large volumes of expensive materials and complicated constructions of the cooling devices.

The object of the invention is to provide an apparatus, in the following referred to a cooling apparatus, which overcomes the above described shortcomings.

This is obtained by means of a cooling apparatus which comprises at least one cooling chamber for cooling hot gas such as stack gas, preferably having a temperature of at least 100 °C, wherein the gas is saturated and cooled by being brought into contact with water, which is added in the form of atomised cooling water, wherein in the gas contained steam is condensed after that the gas is saturated and carries contaminants, whereafter the gas is conducted away, the heated water is collected, whereafter and possibly present contaminants are separated from the water and this is cooled by heat-exchanging with a medium which subsequently may be used for heating purposes. The cooled water is recirculated after the exchange as atomised cooling water. Thus, the hot gases are cooled by their own condensate in a closed re-circulating system which is the main object of the invention. After having started the process, usually no additional water to system is required if the gases are not very dry. Only a quantity of water corresponding to the quantity of water added with the gas is drained off from the system.

### When the hot gases meet the cooling water the following occurs:

In a first "step" the hot gas is saturated by the atomised water. Simultaneously as the gas is saturated with water, also the temperature of the gas decreases, which occurs at constant enthalpy, i. e. the energy content of the gas is constant during the first step.

In a second "step", the gas is further cooled, so that the saturation state is moved, steam in the gas is condensed and gives a condensate. Finally, the gas is cooled to a temperature very near the temperature of the injected water, whereafter the gas leaves the cooling apparatus in a saturated state. In this step the gas is cooled by under tempered cooling water "mechanically", i. e. the many small water drops form a large cooling area.

The heat exchanging area which the many small water drops form, consists of the many small water drop's total surface area, which in counter stream to the gas, at a relatively high velocity between the surface of the drops gives an optimal "heat exchanger". Firstly, the area is large and the heat transfer number is high since the relative velocity is high. The mass flow of liquid is essentially higher than the mass flow of gas.

Since the humid gas is cooled to a temperature equal to or below its point of condensation condensate is formed. The condensate is a working medium, which in a closed circuit of liquid is used for cooling the gas, by being re-circulated and sprayed against the gas. Thus, the gas is cooled by its own condensate. The "remaining" condensate can be drained off from the liquid circuit, i. e. the amount of liquid which they gas contained before the cooling compared to the cooled saturated gas. Any new liquid is not added to the system, but in the starting up of an empty system.

In a cooling chamber arranged in the cooling apparatus means are provided for adding cooling water, which preferably comprise a number of spray nozzles directed today the flow direction of the gas. The cooling chamber according to the invention is in the form of an inclined U-shaped pipe, comprising two essentially parallel pipe legs, connected by means of a curved pipe section. By the inclination of the chamber, water can flow along the legs towards the curved section, the drainage section, in which a drainage for water is provided. Addition of gas is performed into the outlet of one of the legs of the pipe and the cooled gas flows out through the other outlet of the leg.

A cooling apparatus comprises at least one such cooling chamber, preferably more which are connected to each other in series or parallel. To the drainage section in each cooling chamber also a container is connected, in which cooling water is collected. Cooling water from each cooling chamber is conducted in a way, which will be described in more detail below, so that a closed system is obtained, in which only water in excess normally has to be drained off. If required additional cold water is added, if the gases are dry.

The apparatus according to the present invention is very effective in volume, i. e. it has high cooling capacity and thereby requires minimal volume. The construction is simple and thus very cheap to produce. It does not have any of the problems corresponding to other conventional coolers such as: chemical corrosion, pollution, clogging, thermal stress etc. Moreover, the cooling apparatus is very flexible by a simple module system giving many combination possibilities. It can be used for all types of gases; from polluted process gas from industry to stack gas cooling from heat and power producing plants where oil, gas and biological fuel constitute the fuel. It is independent of the input gas temperature and degree of pollution because it comprises large nozzles which do not clog. Pollutants which are precipitated can be handled in the water system with conventional technology of today. By its "scrubber" action, the gas is cleaned effectively which is good for the environment. Furthermore, the cooling apparatus can be made considerably smaller than the cooler for instance in SE-B-500 737 due to the U-shape of the cooling chamber, why this cooling apparatus is considerable superior compared to known technology. It is also much simpler and therefore much cheaper to produce than the cooler described in SE-B-500 737. The cooling area is also very large. The cooling chambers can be divided into separate parts, which can be mounted on site. Than one becomes independent of wide door openings to be able to carry the cooler into the building or the room where it shall be employed.

In the following "stack gas" is referred to as gas from combustion of solid or fluid fuel, and "exhaust-gas" refers to gas which has passed the cooling apparatus. The terms "water" and "cooling water" does not comprise only pure water, but also water solutions having larger or smaller amounts of dissolved and/or dispergated substances, furthermore the water containing liquids comprising not dissolved or dispersed particles, and all types of water containing liquids, comprising a considerable amount of water. "Separation of contaminants" is referred to direct separation of contaminants as well as neutralising contaminants by reacting them to or bonding to any substance, for instance by hydrogen ions being neutralised by means of hydroxide ions. The contaminants can also be separated by means of using one or more sand filters for dust/soot and/or solid particles. If required, the water is pH-regulated.

"Passive cooling" (P) is performed without any mechanical working machine, for instance a heat pump. The cooling medium normally constitutes of a high tempered medium, for instance re-circulated water to a boiler, municipal heating networks etc. The cooling medium can be constituted of water for the warm water generation.

During "active cooling" (A), the cooling is performed contrary to the passive cooling by means of a machine or the like, for instance that heat pump.

The invention is also suitable for cleaning gases at combustion of fuels, comprising in water hard soluble contaminants, for instance stack gases from combustion of biological fuels. The added amount of cooling water in direct contact with the gases is then high.

According to a preferred embodiment of the invention the gas is cooled in first step by being saturated with water, whereafter the gas in a second step is cooled, so that the temperature of gas is decreased by means of atomised cooling water to 5-20 °C, so that heat is transferred to the water, and steam in the gas condenses and brings contaminants. Thereafter, the gas is conducted away and in the water present insoluble contaminants are separated from the water. Present water soluble contaminants are at least partly separated from the water, whereafter the water is cooled by heat-exchanging and thereafter returned to the first and/or the second step. Thus, the gas is cooled by its own condensate in a closed re-circulating system. A certain addition of water can be required for compensating evaporation etc.

In an alternative embodiment of the invention the gas is cooled in three steps, which besides the above mentioned two steps also includes a third step, in which a heat-pump is used. This embodiment is usually not preferred, since it usually is much more expensive without improving the cooling correspondingly.

In the following the invention will be described in more detail with reference to the accompanying drawings, in which:
Fig. 1A a principal and schematic side view of a cooling chamber in cross-section, illustrating the basic principle of the invention, i. e. a cooling chamber having only passive or active cooling;
Fig. 1B is as simplified side-view of the embodiment illustrated in Fig. 1A;
Fig. 1C is a simplified schematic perspective view, partly of the in Fig. 1A illustrated embodiment;
Fig. 2A is a schematic side view of a cooling chamber;
Fig. 2B is a schematic side view of two in series connected cooling chambers illustrating a combination of passive (P) and active (A) cooling. The preferred embodiment of the invention comprises two in series connected cooling chambers having passive cooling only;
Fig. 2 C is a schematic side view of two in parallel connected cooling chamber having only passive (P) or active (A) cooling;
Fig. 3 is a principal schematic of an alternative embodiment of the invention, illustrating a P1P2A system, i. e. three in series connected cooling chambers, in which the two first are passive and the latter active. The heat-exchanger in the first cooling chamber (passive 1) is connected to the return of the municipal heating networks or return water to the primary circuit of a boiler and the heat-exchanger of the second cooling chamber (passive 2) is employed for pre-heating and humidifying primary air to a boiler.
Fig. 4 illustrates how a sand filter can be connected in the system, to remove contaminants from the cooling water. Only one cooling chamber is shown in cross-section from the side with corresponding filter.

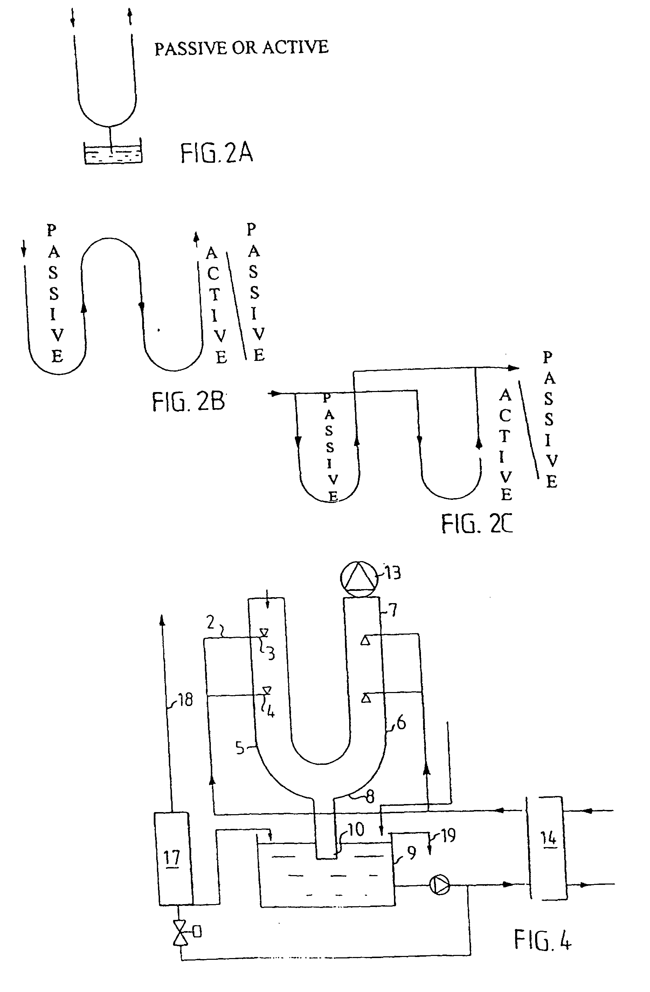

Thus, the system provides a number of combination possibilities. If only passive (P) or active (A) cooling its desired, this is achieved according to the basic embodiment illustrated in Fig. 2A. The construction can vary depending on capacity and/or physical requirements according to Fig. 2C.

The preferred embodiment is illustrated in Figure 2B.

In an alternative embodiment both passive and active cooling are employed.

### Detailed description of the embodiments

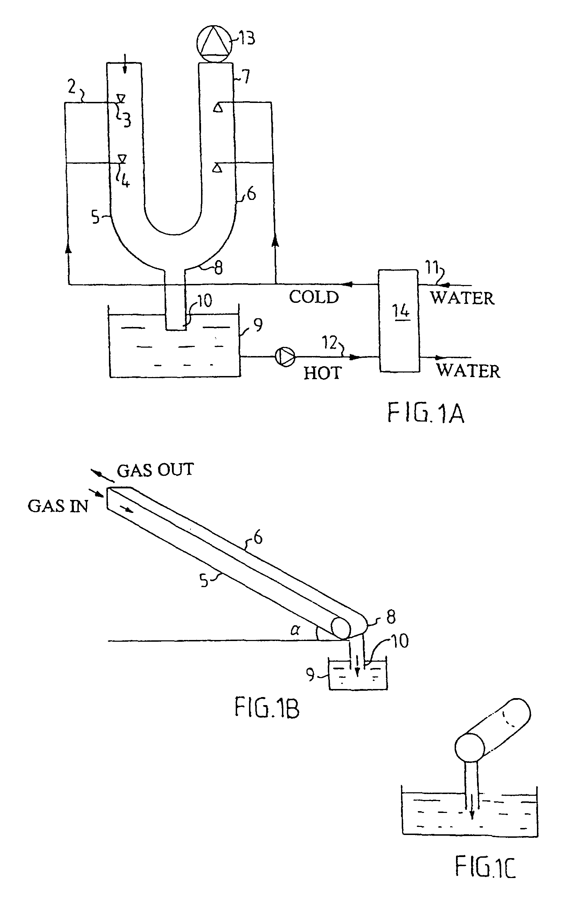

In Fig. 1A, illustrating a U-shaped cooling chamber 4, manufactured in one piece of a pipe having the same cross-section along its entire length, incoming hot, polluted gas is conducted through an inlet channel 1, in a first leg 5 of the pipe, further to a drain pipe section 8 and the to the other leg 6. In the legs there is a means 2 arranged, in which cooling water is added. The means 2 comprises a number of spray nozzles 3, through which the added cooling water is atomised and a very large contact area between the gas and water is obtained. The hot gas is cooled down at essentially constant entalphy and is saturated with water. The gas is cooled further and is conducted out via an outlet channel 7 through a fan 13. At the cooling almost all water content of the gas is condensed and flows together with the water added, along the walls of the legs down to the curved pipe section 8 since the cooling chamber is inclined downwards, which is illustrated in Fig. 1B. The condensed water carries contaminants, which followed the incoming gas and flows down into a container 9, provided with a water lock 10. The contaminants can then be separated for instance by using a sand filter, which is illustrated in Fig. 4. The collected cooling water in the container 9 is conducted in a conduit 12 to a heat-exchanger 14, in which it is heat-exchanged with water coming from a conduit 11. The cooled water is re-circulated through conduits 2 to the spray nozzles in the cooling chamber. Thus, no additional water has to be added during the cooling. If necessary some water must be drained off through a spillway 19 (Fig. 4). This amount corresponds to the amount to water which is added with the gas. Sometimes it is necessary to use pH-regulation etc., which is also illustrated in Fig. 4. To eliminate the contaminants, for instance a sand filter 17 is used, so that a part of the water is allowed to pass the sand filter after the container 9, whereafter dust in concentrated form is removed via a conduit 18 for sedimentation etc.

If required, the spray nozzles 3 can be made movable so that cooling water can be sprayed co-current, counter current or cross current to the gas stream; especially if there is a risk that the gas is so loaded with particles that the spray nozzles 3 can clog, the nozzles 3 are turned so that they spray in co-current. Of course the apparatus 4 according to the invention may be provided with non-movable nozzles 3, spraying co-current, counter current of cross current, or in any combination of these directions.

Fig. 1 B and 1 C illustrate how the tubular cooling chamber 4 is inclined to allow the water to flow down to the drain section 8.

Figure 2 A-C illustrate schematic all different connections passive/active which are possible within the invention. P represents passive and A active.

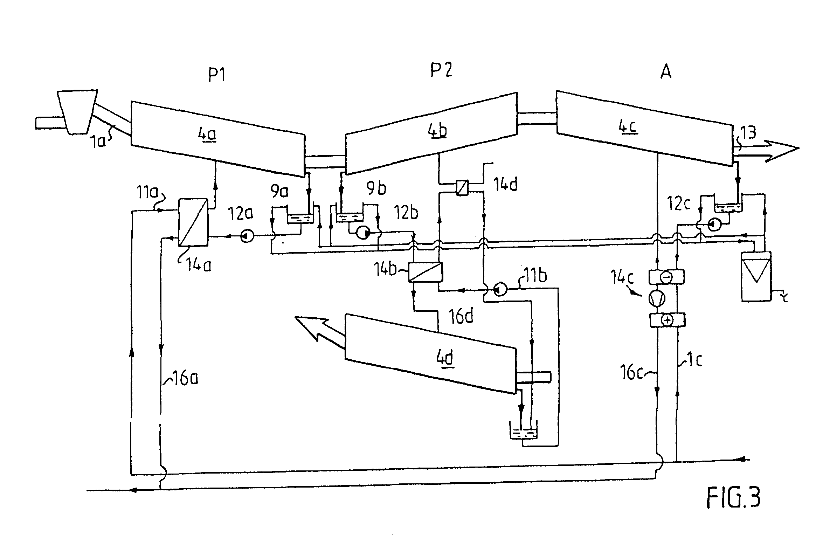

The apparatus according to the invention will be described in more detail with reference to Fig. 3, which illustrates one embodiment of the invention. In the first "step" the corresponding equipment is represented by "a", in the second by "b", in the third by "c" and the apparatus for humidifying air by "d". Fig. 3 illustrates schematically a diagram of connections of an apparatus, in which the cooling chambers 4a-c only are shown as rectangulars. The connections between each cooling chamber is very simplified and does not show a real pipe connection.

Temperatures in Fig. 3 relate to gas temperatures if not otherwise stated.

In Fig. 3 is shown an embodiment of an apparatus having P1P2A-cooling, i. e. two passive and one active step connected in series.

It is shown how the cooling chambers can be connected in a boiler plant. The hot gas is conducted from cooling chambers 4a to 4c, and thereafter to the surroundings. The gas is fed via the inlet 1 to cooling chamber 4a and meets water added by means of the nozzles 3a-c in each cooling chamber. The first stage 4a and the second stage 4b cools passive. The third stage 4c cools active, which is proyided by letting the cooling water in conduit 12c pass a heat-exchange pump 14c.

Firstly, the hot gas is conducted to the cooling chamber 4a (stage 4a) via the inlet 1a and thereby meets cooling water coming from conduit 12a. The function of the cooling chamber 4a is as described in Figure 1A. The water heated by the gas is transported via the container 9a further via conduit 12a to a heat-exchanger 14a, in which interchange of heat is obtained with incoming cooling water in conduit 11a. From the container 9a some water is if required transferred for condensate treatment, pH-regulation and dust collection. The gas is thereafter further transferred from the first stage 4a to the second stage 4b and is treated in the same way. The cooling water is fed from the container 9b further to a heat exchanger 14b, in which interchange of heat with water is obtained, which is used in a humidifying part 4d for humidifying primary air to a boiler. The primary air obtains a relative humidity of 100 %, and at the same time the temperature of the air is increased from 20 °C to ca 40 °C. If required, in this second stage additional cold water (cw) is added if the stream of air is dry. This cold water is pre-heated in a heat exchanger 4d, by interchanging heat with the re-circulation water to the nozzles in the cooling chamber 4b. The gas is fed from the second stage 4b to the third stage 4c. In the third stage 4c the gas is cooled actively by means of meeting water 12c cooled by the heat-pump 14c, wherafter the gas finally is discharged by a fan 13. The dust concentration of the gas has now decreased from > 3000 mg/Nm³ to < 25 mg/Nm³.

Fig. 4 illustrates how a sand filter can be connected to a cooling chamber. A portion of the cooling water from the container 9 is pumped to the cooling means 2, and a second portion is allowed to pass a sand filter 15. From the sand filter 15 the cleaned cooling water is returned to the container 9. The contaminants in the filter can intermittently be flushed out of by being eliminated through a drain pipe 18. In Fig. 4 is also illustrated a spillway 19 for discharging condensate in excess. To the container 9 also pH-modifiers can be added. If oil has been combusted the water is acidic and then basic pH-modifiers are added to neutralise the cooling water. For biologic pulp the opposite occurs.

The invention will now be described by three examples:

### Example

Data for a boiler plant having 100 MW power.

### Example 1

| Passive cooling | | | |
|---|---|---|---|
| Fuel | Oil (EO1) | CHIP (50%) | BRIQUETTE |
| Flow of cond. litre/h | 0 | 167 | 122 |
| Power recovered | 71 | 259 | 98 |

### Example 2

Same fuel as in Example 1

| Fuel | Oil (EO1) | CHIP (50%) | BRIQUETTE |
|---|---|---|---|
| Flow of cond. litre/h | 67 | 106 | 85 |
| Power recovered | 60 | 112 | 90 |

### Example 3

Same fuel as in Example 1.

Passive and active cooling. Active cooling is provided with a heat transfer number of 3,3.

| Fuel | Oil (EO1) | CHIP (50%) | BRIQUETTE |
|---|---|---|---|
| Flow of cond. litre/h | 18 | 28 | 23 |
| Power recovered | 35 | 129 | 49 |

The stack gas temperature was 150 °C for chips and briquettes and 180 °C for oil.

Total power was 1500 kW (chip), 1237 (briquettes) and 1166 kW (oil).

And shown in the results the recovered power is higher when both passive and active cooling is employed, but the cost to obtain this relatively small change is often too large. Therefore usually two stages having only passive cooling is preferred, which in most cases is fully satisfactory.

Temperature is illustrated in Fig. 3 for all fuels. Data are approximative.

The scope of the invention is not limited to anything but the appended claims. Within the scope of the invention of course other embodiments are possible which persons skilled in the art our may obtain.

## Claims

1. An apparatus for cooling hot gases from combustion of solid, fluid or gaseous fuels, possibly containing water soluble and/or insoluble pollutants, wherein the gas is saturated with atomised water in at least one stage, whereafter the gas is cooled and gives a condensate, which apparatus comprises:
- at least one cooling chamber (4) into which one gas inlet (1) ends;
- at least one gas outlet (7) provided in the cooling chamber (4);
- at least one cooling means (2) provided in the cooling chamber (4), for instance a spray nozzle, for adding cooling water in atomised form;
- at least one outlet for cooling water from the cooling chamber (4) and a thereto connected container (9) for collecting cooling water from the cooling chamber (4);
- a heat exchanger (14);
- if required, equipment for condensate treatment, pH-modification and dust collection;
**characterised in that** the cooling chamber (4) is a pipe comprising a first and a second pipe leg (5, 6) being essentially parallel and having a curved pipe section (8) connecting the legs (5, 6), wherein the cooling chamber (4) is inclined, at an angle α to a horizontal plane, so that the cooling water flows down into the curved pipe section (8) and further to the heat exchanger (14), whereby the heated cooling water essentially comprising the condensate of the gas is cooled by the heat exchanger prior to being returned to the cooling means (2), whereby the apparatus forms a closed re-circulating system.

2. An apparatus according to claim 1, **characterised in that** the first pipe leg (5) of the cooling chamber (4) is made of a high quality heat resistant material, for instance stainless, acid resistant steel and the second pipe leg (6) is made of a less noble and cheaper material, for instance a polymeric material.

3. An apparatus according to any one of the claims 1-2, comprising at least two cooling chambers (4a, 4b), **characterised in that** the cooling chambers (4a, 4b) are connected in series or parallel to each other.

4. An apparatus according to claim 3, **characterised in that** the first cooling chamber (4a) is cooled passive and the second cooling chamber (4b) in series with the first cooling chamber (4a) is cooled passive.

5. An apparatus according to claim 3, **characterised in that** the heat exchanger (14) is an evaporator in a heat pump system.

## Patentansprüche

1. Vorrichtung zum Kühlen heißer Gase aus der Verbrennung fester, flüssiger oder gasförmiger Kraftstoffe, die möglicherweise wasserlösliche und/oder -unlösliche Schadstoffe enthalten, wobei das Gas mit zerstäubtem Wasser in mindestens einer Stufe gesättigt wird, woraufhin das Gas gekühlt wird und ein Kondensat ergibt, welche Vorrichtung aufweist:
- mindestens eine Kühlkammer (4), in der ein Gaseinlass (1) endet;
- mindestens einen Gasauslass (7), der in der Kühlkammer (4) vorgesehen ist;
- mindestens eine Kühleinrichtung (2), die in der Kühlkammer (4) vorgesehen ist, beispielsweise eine Sprühdüse, zum Hinzufügen von Kühlwasser in zerstäubter Form;
- mindestens einen Auslass für Kühlwasser von der Kühlkammer (4) und einen hiermit verbundenen Behälter (9) zum Sammeln von Kühlwasser von der Kühlkammer (4);
- einen Wärmetauscher (14);
- falls erforderlich, eine Ausrüstung zur Kondensatbehandlung, pH-Modifikation und Staubsammlung;
**dadurch gekennzeichnet, dass** die Kühlkammer (4) ein Rohr ist, das einen ersten und einen zweiten Rohrschenkel (5, 6) aufweist, die im wesentlichen parallel sind, und einen gekrümmten Rohrabschnitt (8) besitzt, der die Schenkel (5, 6) verbindet, wobei die Kühlkammer (4) unter einem Winkel (α) gegenüber einer horizontalen Ebene geneigt ist, sodass das Kühlwasser nach unten in den gekrümmten Rohrabschnitt (8) und weiter zu dem Wärmetauscher (14) strömt, wobei das erwärmte Kühlwasser, das im Wesentlichen das Kondensat des Gases enthält, durch den Wärmetauscher gekühlt wird, bevor es zu der Kühleinrichtung (2) zurückgeführt wird, wobei die Vorrichtung ein geschlossenes Kreislaufsystem bildet.

2. Vorrichtung nach Anspruch 1, **dadurch gekennzeichnet, dass** der erste Rohrschenkel (5) der Kühlkammer (4) aus einem hochwiderstandsfähigen Hochqualitäts-Material, beispielsweise rostfreiem, säurewiderstandsfähigem Stahl, hergestellt ist, und der zweite Rohrschenkel (6) aus einem weniger wertigem und günstigerem Material, z.B. einem Polymermaterial hergestellt ist.

3. Vorrichtung nach einem der Ansprüche 1 bis 2, umfassend mindestens zwei Kühlkammern (4a, 4b), **dadurch gekennzeichnet, dass** die Kühlkammer (4a, 4b) in Reihe oder parallel zueinander verbunden sind.

4. Vorrichtung nach Anspruch 3, **dadurch gekennzeichnet, dass** die erste Kühlkammer (4a) passiv gekühlt wird und die zweite Kühlkammer (4b) in Reihe zu der ersten Kühlkammer (4a) passiv gekühlt wird.

5. Vorrichtung nach Anspruch 3, **dadurch gekennzeichnet, dass** der Wärmetauscher (14) ein Verdampfer in einem Wärmepumpensystem ist.

## Revendications

1. Dispositif permettant de refroidir les gaz chauds provenant de la combustion de combustibles solides, liquides ou gazeux, contenant éventuellement des polluants solubles et/ou insolubles dans l'eau, le gaz étant saturé d'eau atomisée au cours d'au moins une étape, après quoi le gaz est refroidi et donne un condensat, lequel dispositif comprend :
- au moins une chambre de refroidissement (4) dans laquelle débouche une entrée (1) de gaz ;
- au moins une sortie (7) de gaz prévue dans la chambre de refroidissement (4) ;
- au moins un moyen de refroidissement (2) prévu dans la chambre de refroidissement (4), par exemple une buse de pulvérisation, pour ajouter de l'eau de refroidissement sous forme atomisée ;
- au moins une sortie pour l'eau de refroidissement provenant de la chambre de refroidissement (4) et un récipient (9) connecté à celle-ci pour recueillir l'eau de refroidissement provenant de la chambre de refroidissement (4) ;
- un échangeur de chaleur (14) ;
- si nécessaire, un équipement pour le traitement du condensat, pour la modification du pH et pour recueillir les poussières ;
**caractérisé en ce que** la chambre de refroidissement (4) est un tuyau comprenant une première et une deuxième branche (5, 6) de tuyau essentiellement parallèles et ayant une section de tuyau courbée (8) qui relie les branches (5, 6), la chambre de refroidissement (4) étant inclinée, selon un angle α par rapport à un plan horizontal, de sorte que l'eau de refroidissement s'écoule dans la section de tuyau courbée (8) puis jusqu'à l'échangeur de chaleur (14), grâce à quoi l'eau de refroidissement chauffée comprenant essentiellement le condensat du gaz est refroidie par l'échangeur de chaleur avant d'être renvoyée au moyen de refroidissement (2), grâce à quoi le dispositif forme un système de recirculation fermé.

2. Dispositif selon la revendication 1, **caractérisé en ce que** la première branche (5) de tuyau de la chambre de refroidissement (4) est faite d'un matériau résistant à la chaleur de haute qualité, par exemple de l'acier inoxydable résistant aux acides et la deuxième branche (6) de tuyau est faite d'un matériau moins noble et plus économique, par exemple un matériau polymère.

3. Dispositif selon l'une quelconque des revendications 1 à 2, comprenant au moins deux chambres de refroidissement (4a, 4b), **caractérisé en ce que** les chambres de refroidissement (4a, 4b) sont reliées entre elles en série ou en parallèle.

4. Dispositif selon la revendication 3, **caractérisé en ce que** la première chambre de refroidissement (4a) est refroidie de manière passive et la deuxième chambre de refroidissement (4b), en série avec la première chambre de refroidissement (4a), est refroidie de manière passive.

5. Dispositif selon la revendication 3, **caractérisé en ce que** l'échangeur de chaleur (14) est un évaporateur d'un système de pompe à chaleur.
